Europäisches Patentamt

European Patent Office

Office européen des brevets

(19)

(11) Numéro de publication : **0 140 775**
**B1**

(12) FASCICULE DE BREVET EUROPÉEN

(45) Date de publication du fascicule du brevet :
06.05.87

(51) Int. Cl.⁴ : **B 23 K 11/34, C 25 D 11/38**

(21) Numéro de dépôt : 84402046.1

(22) Date de dépôt : 11.10.84

(54) **Procédé de soudage à la molette.**

(30) Priorité : 14.10.83 FR 8316357

(43) Date de publication de la demande :
08.05.85 Bulletin 85/19

(45) Mention de la délivrance du brevet :
06.05.87 Bulletin 87/19

(84) Etats contractants désignés :
BE DE GB IT LU NL

(56) Documents cités :
EP-A- 0 025 396
EP-A- 0 041 893
FR-A- 2 304 434
FR-A- 2 362 056
FR-A- 2 516 553
GB-A- 2 072 074

(73) Titulaire : CARNAUD S.A. Société Anonyme dite :
65, avenue Edouard Vaillant
F-92103 Boulogne-Sur-Seine (FR)

(72) Inventeur : Mergey, Claude
34, 36 rue de Marnes
F-92410 Ville D'Avray (FR)
Inventeur : Robichon, Patrice
4 rue Alfred Dormeuil
F-78290 Croissy-Sur-Seine (FR)

(74) Mandataire : CABINET BONNET-THIRION
95 Boulevard Beaumarchais
F-75003 Paris (FR)

## 0 140 775

**Description**

L'invention a trait à un procédé de soudage à la molette de corps d'emballages formés en cylindre, notamment boîtes à conserves, en un matériau comportant sur une des faces au moins d'une tôle d'acier doux un revêtement conducteur de protection dont la résistance spécifique de contact relative au cuivre est au moins égale à $1 \times 10^{-5}$ ohm/cm$^2$.

Plus particulièrement l'invention a trait à un procédé de soudage à la molette où la tôle est revêtue sur chaque face d'une couche d'étain au plus égale à 1,05 g/m$^2$, recouverte d'une couche mixte de chrome et d'oxyde de chrome, constituée de 5 à 140 mg/m$^2$ de chrome métallique et de 1 à 30 mg/m$^2$ de chrome à l'état d'oxyde.

Pour le soudage à la molette, le corps, roulé avec des lèvres venant en superposition suivant une génératrice, défile à une vitesse pouvant atteindre au moins 50 m/min. serré entre deux électrodes de soudage par résistance.

Le brevet français n° 1.258.185 décrit une machine de soudage où les deux électrodes sont des molettes, un fil de cuivre étant interposé entre les molettes et les faces du corps suivant les génératrices ; la molette qui s'applique à la face interne du corps présente, pour passer à l'intérieur du corps, un diamètre inférieur à celui du corps, tandis que l'autre molette présente un diamètre supérieur.

On trouve des machines analogues, où l'électrode autour de laquelle passe le corps d'emballage est un patin rectiligne ou présentant un rayon de courbure grand devant celui de la molette qui forme l'électrode extérieure.

Le soudage à la molette est un type particulier de soudage par résistance ; le passage de courant entre deux électrodes qui sont appliquées à une superposition de tôles provoque une fusion locale du métal des tôles là où elles sont en contact, avec une copénétration du métal fondu. La bonne qualité du point de soudure nécessite que la zone de fusion intéresse les deux tôles, sans pour autant atteindre les surfaces externes des tôles. Or l'échauffement se produit, en proportion des résistances rencontrées, aux contacts entre faces externes des tôles et électrodes correspondantes dans l'épaisseur des tôles, et au point de contact entre ces dernières. Par ailleurs les électrodes relativement massives et en métal bon conducteur de la chaleur drainent de l'énergie thermique depuis le point de soudure et refroidissent surtout les zones où elles sont en contact. On rappelle que, dans les métaux, les conductivités électrique et thermique sont corrélées, étant dues l'une et l'autre aux électrons de conduction.

La résistance électrique intrinsèque des tôles est bien définie, même si les lignes de courant ne sont pas partout normales au plan de soudure. Par contre ce qu'on appelle résistance de contact entre métaux différents est assez éloigné d'une résistance ohmique théorique, et met en jeu des mécanismes de conduction divers, en général non linéaires. On ne peut définir une résistance de contact sans préciser les conditions de mesure, essentiellement densité de courant et pression de contact ; et il y a intérêt à préciser des conditions opératoires voisines de celles qui sont rencontrées lors du soudage, si l'on veut que les mesures soient significatives.

Dans le brevet français n° 2.465.011, la Demanderesse a décrit une méthode de mesure suivant laquelle la tôle revêtue dont il convient de mesurer la résistance de contact est serrée entre deux électrodes de cuivre présentant une face dressée de 10 mm$^2$, avec une force de 1 400 Newtons ; on fait passer entre les électrodes un courant de 1 Ampère, et l'on mesure la chute de tension entre les électrodes. Cette tension se situe entre 50 microvolts et quelques millivolts pour des matériaux courants.

Cette méthode de mesure est globale, en ce sens qu'elle prend en compte les résistances de contact entre chaque électrode et la face revêtue sur laquelle elles s'appliquent. La Demanderesse a développé la méthode pour atteindre la résistance de contact d'un couple électrode-face revêtue ; en effet elle a constaté que la résistance de contact entre les électrodes de cuivre elles-mêmes (à vide) s'établissait à environ 50 microhms, et que la résistance de contact globale d'un fer blanc ne différait pas de cette valeur de façon significative ; en outre on retrouvait des valeurs sensiblement du même ordre avec une tôle revêtue quelconque, en supprimant les revêtements par abrasion, et en procédant à un étamage électrolytique correspondant à un fer blanc classique (au moins 1,2 g/m$^2$, de préférence 2,8 g/m$^2$ par face) des surfaces mises à nu. On notera que la résistance propre de la tôle d'acier doux, prise transversalement sur une section de 10 mm$^2$ est d'environ 2,5 microhms. Il en résulte que l'on peut déterminer la résistance de contact entre cuivre et le revêtement d'une face en enlevant localement le revêtement de l'autre face, puis en procédant à un recouvrement électrolytique d'étain là où le revêtement a été enlevé, et enfin en mesurant la résistance de contact par la méthode définie précédemment, avec une électrode en contact avec le revêtement d'étain.

Dans ce qui suit on parlera de résistance de contact spécifique relative au cuivre, ou résistance par unité de surface. Par convention on utilisera le centimètre carré comme unité de surface, et les valeurs seront exprimées en $10^{-5}$ ohm/cm$^2$. Si l'unité n'est pas précisée explicitement, c'est cette unité $10^{-5}$ ohm/cm$^2$ qui sera utilisée.

On notera que la résistance de contact entre faces de tôles appliquées l'une contre l'autre suivant la génératrice de soudage, est cause d'un échauffement à l'emplacement exact où la température doit être maximale, tandis que les résistances de contact entre faces de tôles et électrodes se situent en des emplacements où l'échauffement doit être minimisé. A priori il serait donc souhaitable que la résistance

2

de contact entre faces de tôles en regard soit maximale, et les résistances de contact entre faces de tôles et électrodes en regard soient minimales. Mais il existe une corrélation entre résistances de contact entre tôles, et entre électrodes et tôles. Par ailleurs l'influence de l'épaisseur des tôles joue sur l'échauffement dans la masse de la tôle, et sur la vitesse de diffusion de la chaleur de la zone de soudure vers les électrodes.

A tous ces paramètres qui conditionnent la qualité du soudage par résistance viennent s'ajouter des paramètres propres à la soudure à la molette, tout particulièrement à la soudure à la molette des corps d'emballage cylindriques dans les conditions évoquées plus haut.

Une première contrainte résulte de la vitesse de défilement des corps : un point de soudure est formé à chaque demi-alternance d'une tension alternative de fréquence égale à quelques centaines de Hertz, appliquée entre les électrodes par l'intermédiaire d'un transformateur approprié. Le réglage de l'énergie dissipée dans les points de soudure est obtenu par réglage de l'angle de conduction de semi-conducteurs à décharge commandée disposés dans le circuit primaire du transformateur. On conçoit que, même en stabilisant avec soin l'angle de conduction, les variations, de nature aléatoire, des propriétés électriques des tôles et des électrodes, entraînent des fluctuations de la qualité des points de soudure. La soudabilité des tôles, telles que celles qui constituent les corps de boîtes à conserve, ne doit pas s'entendre uniquement de leur aptitude à se souder en un point, après un réglage approprié. On doit prendre en considération également la probabilité d'apparition de points de soudure défectueux en production sur un réglage moyen, en conséquence de variations aléatoires des propriétés des tôles et des électrodes. Cet aspect de la qualité du soudage peut s'exprimer, au moins qualitativement, par le domaine de variation de l'angle de conduction à l'intérieur duquel on obtient des résultats acceptables en production. Ce domaine sera dit latitude de soudage.

D'autres contraintes particulières à la soudure à la molette de corps cylindriques seront évoquées plus loin.

Le brevet français 2.465.011 précité, vise un matériau comportant, sur les deux faces d'une tôle d'acier doux une couche d'étain libre, recouverte d'une couche mixte de chrome et d'oxyde de chrome contenant de 50 à 100 mg/m$^2$ de chrome métallique et de 6 à 25 mg/m$^2$ de chrome à l'état d'oxyde. La demande de brevet européen EP 25 396 précise que la couche d'étain est de 0,1 à 1,5 g/m$^2$.

Ce matériau est remarquable par sa soudabilité à la molette, pour autant qu'il n'ait pas subi, avant soudage, un chauffage tel qu'une part non négligeable de l'étain se soit allié au fer sous-jacent. Ceci exclut le vernissage de la tôle avec un vernis organique polymérisé avant soudage, à une température supérieure ou égale à 200 ºC.

La demande de brevet japonais 56-119 796 (1981) décrit un feuillard d'acier chromé avec d'un côté 5 à 50 mg/m$^2$ de chrome métallique et 2 à 30 mg/m$^2$ de chrome à l'état d'oxyde, de l'autre 0,5 à 10 mg/m$^2$ de chrome métallique et 2 à 30 mg/m$^2$ de chrome à l'état d'oxyde. Suivant les enseignements de cette demande de brevet, ce matériau est soudable à la molette, à la vitesse de 20 m/min. La soudabilité est attribuée au fait que la quantité totale de chrome métallique est limitée, réduisant d'autant la résistance de contact globale électrode/tôle/tôle/électrode. Par ailleurs un revêtement comprenant de 0,5 à 10 mg/m$^2$ de chrome métallique assurerait à la surface extérieure du corps de boîte, revêtue d'un feuil de peinture, une protection convenable, le rôle du chrome métallique se réduisant à assurer la liaison entre l'acier et l'oxyde de chrome. Les travaux de la Demanderesse conduisent à douter de la pertinence du mécanisme invoqué dans la demande japonaise, sans pour autant mettre en doute la soudabilité du matériau, dans les conditions précisées de vitesse de défilement, et selon les critères de qualité de soudure implicitement admis.

La demande de brevet français 8 121 384 (FR-A-2.516.553) décrit une tôle d'acier qui est revêtue d'un côté d'une couche d'étain, comprise entre 0,2 et 10 g/m$^2$ et de l'autre d'une couche mixte de chrome métallique (20-250 mg/m$^2$) et de chrome à l'état d'oxyde (5-40 mg/m$^2$). Suivant les enseignements de cette demande de brevet, ce matériau serait soudable à la molette, à une vitesse de défilement non précisée. La soudabilité est attribuée au fait que le contact entre les deux faces de la tôle ne comporte qu'une épaisseur de chrome et une épaisseur d'oxyde de chrome au lieu de deux pour des matériaux antérieurs, ce qui réduirait la résistance de passage au courant. En outre l'étain protègerait contre la corrosion d'un certain type et la couche mixte contre la corrosion d'un autre type : par exemple l'étain conviendrait au contact de produits alimentaires tandis que la couche mixte de chrome et d'oxyde de chrome conviendrait contre la corrosion due aux agents atmosphériques.

Les conclusions que la Demanderesse a tirées de ses travaux sur la soudabilité à la molette ne coïncident pas avec les vues exprimées dans ce document FR-A-2.516.553 sur la soudabilité du matériau décrit. Par ailleurs on notera que la disposition préférée de cette demande FR-A-2.516.553, selon laquelle l'étain est sur la face intérieure du corps de boîte est peu favorable au vernissage intérieur, l'étain ne constituant pas une couche d'accrochage très efficace pour le vernis, notamment dans le cas de faibles revêtements (0,2 à 1,05 g/m$^2$). On rappelle que les revêtements chrome/oxyde de chrome ont pour fonction, entre autres d'améliorer l'accrochage des vernis. Ceci conduirait dans de nombreux cas à utiliser des épaisseurs d'étain suffisantes pour protéger par elles-mêmes la tôle contre la corrosion, c'est-à-dire à utiliser des quantités d'étain comparables à celles des fers blancs classiques. Sous un autre aspect on rappelle que les fers blancs classiques se soudent à la molette sans grandes difficultés. Enfin l'expérience de la Demanderesse la conduit à craindre que les installations capables de déposer de l'étain sur une face d'une tôle, et du chrome mélangé d'oxyde sur l'autre, avec une fiabilité convenable ne soient complexes et onéreuses en production.

L'invention a pour objet un procédé de soudage à la molette de corps d'emballages, du type boîtes à conserve, qui s'exécute avec un matériau présentant sur ses faces un revêtement conducteur de protection dont la résistance spécifique de contact vis-à-vis du cuivre est supérieure à $1 \times 10^{-5}$ ohm/cm$^2$.

L'invention a également pour objet un tel procédé de soudage qui autorise une grande latitude de réglage du courant de soudage.

A cet effet l'invention propose un procédé de soudage de corps d'emballages formés en cylindre, notamment boîtes à conserve, en un matériau comportant sur une des faces au moins d'une tôle d'acier doux un revêtement conducteur de protection dont la résistance spécifique de contact vis-à-vis du cuivre est au moins égale à $1 \times 10^{-5}$ ohm/cm$^2$, procédé où le corps, roulé avec des lèvres venant en superposition suivant une génératrice défile, à une vitesse pouvant atteindre au moins 50 m/min. serré suivant cette génératrice entre deux électrodes de soudage par résistance, le rapport du rayon de courbure d'une première électrode à celui de la seconde étant au moins égale à 1,2, caractérisé en ce que l'on choisit le matériau avec un rapport de résistance spécifique de contact de la première face à celle de la seconde au moins égal à 1,2, et en ce que le matériau est roulé en sorte que la première face soit en contact avec la première électrode.

Sous un autre aspect l'invention a pour objet un procédé de soudage à la molette qui s'exécute avec un matériau recouvert sur ses deux faces d'une couche d'étain mince et d'une couche mixte chromeoxyde de chrome, même lorsque l'étain est totalement allié au fer.

On rappelle que sur les machines de soudage classiques, du type décrit dans le brevet français 1.258.185, la molette autour de laquelle défile le corps est nécessairement d'un diamètre réduit, pour ne pas entrer en contact avec la face intérieure du corps ailleurs que suivant la génératrice de soudage, et que l'autre molette, pour des raisons de construction et de bon fonctionnement est d'un diamètre nettement supérieur. Aussi la surface de contact entre la molette et la face intérieure du corps est réduite par rapport à la surface de contact de l'autre molette avec la face extérieure du corps. On notera que la présence d'un fil de cuivre interposé entre molettes et faces du corps ne change pas substantiellement le rapport des surfaces de contact.

Par ailleurs la situation est inversée lorsque l'électrode intérieure autour de laquelle défile le corps présente un rayon de courbure supérieur à celui de la molette qui forme la seconde électrode à l'extérieur du corps de boîte.

La Demanderesse a soupçonné que l'asymétrie des surfaces de contact pouvait entraîner des conséquences fâcheuses sur la qualité des points de soudure, l'interface entre l'électrode de plus petit rayon de courbure et la lèvre correspondante étant le siège d'un dégagement d'énergie supérieur à celui qui se produit à l'interface entre la seconde lèvre et l'électrode à plus grand rayon de courbure. En outre la première lèvre est moins bien refroidie que la seconde par la diffusion de la chaleur vers l'électrode correspondante.

De plus le dégagement d'énergie à la première interface affecte une surface moindre.

Dans la suite de la description, on se placera dans le cas le plus courant de machines de soudage avec une molette intérieure de petit diamètre, et une molette extérieure de plus grand diamètre. Dans ces conditions l'électrode de plus petit rayon de courbure sera la molette intérieure, et la face en contact avec l'électrode de plus petit rayon de courbure sera la face intérieure du corps.

Suivant le document FR-A-2.483.824 on peut augmenter la surface de contact intérieure en équipant la machine d'une molette auxiliaire à proximité de la molette intérieure, de façon à supporter le fil de cuivre contre la lèvre intérieure sur une longueur accrue.

Dans le cadre de la présente invention la Demanderesse a imaginé de compenser la dissymétrie des surfaces de contact des électrodes avec les faces du matériau par une dissymétrie des résistances spécifiques de contact des faces du matériau vis-à-vis du cuivre, de façon à rééquilibrer les résistances de contact, au moins qualitativement. Elle a donc précisé la méthode de mesure de résistance de contact d'une face de matériau vis-à-vis du cuivre, comme il a été exposé plus haut. Elle a ensuite étudié, sur cette face, les variations de résistance spécifique de contact qui résultaient d'une variation d'épaisseur, soit de la couche d'étain, soit de la couche mixte de chrome et d'oxyde de chrome ; elle a ainsi mis en évidence des diminutions de résistance spécifique de contact avec l'augmentation d'épaisseur d'étain, et des augmentations de résistance spécifique de contact avec l'augmentation d'épaisseur de la couche de chrome/oxyde de chrome.

Par la suite, des essais de soudage de matériaux à revêtements présentant des résistances spécifiques de contact différentes, par différence d'épaisseur des revêtements ont fait apparaître que, d'une part, lorsque les résistances spécifiques de contact vis-à-vis du cuivre des revêtements des deux faces étaient inférieures à $1 \times 10^{-5}$ ohm/cm$^2$, la soudabilité était bonne et la latitude de soudage convenable, quel que soit le rapport des résistances spécifiques de contact, et que. d'autre part, lorsque la résistance spécifique de contact vis-à-vis du cuivre d'une face du matériau dépasse $1 \times 10^{-5}$ ohm/cm$^2$, et plus encore lorsque les résistances spécifiques de contact des deux faces dépassent cette valeur, on obtenait des latitudes de soudage nettement plus grandes lorsqu'à la petite molette était associée la face à résistance spécifique de contact la plus faible, tandis que toute latitude de soudage

4

disparaissait dans le cas contraire.

Par ailleurs il s'avérait que la dissymétrie des épaisseurs de revêtement ou des résistances spécifiques de contact jouait un rôle plus important que les valeurs absolues de ces épaisseurs ou résistances spécifiques. Enfin on constatait que certains matériaux, réputés non soudables à la molette, étaient en fait soudables si leurs revêtements étaient rendus dissymétriques, et utilisés suivant les règles énoncées ci-dessus pour respecter le sens de mise en œuvre par rapport à la disposition des électrodes à rayons de courbure différents. C'est ainsi que des matériaux avec une couche mince d'étain surmontée d'une couche mixte de chrome et d'oxyde de chrome ont pu être soudés à la molette avec une latitude de soudage confortable alors que tout l'étain s'était allié au fer au cours d'un étuvage à une température d'au moins 200 °C, telle que lors d'une polymérisation de vernis.

Les caractéristiques et avantages de l'invention ressortiront d'ailleurs de la description qui va suivre, assortie d'exemples.

Exemple 1. Appréciation de la latitude de soudage.

On a exécuté une série d'essais sur une machine à souder à la molette comportant une molette extérieure, de diamètre sensiblement double de celui de la molette intérieure, portant sur des matériaux pour la réalisation de corps de boîtes à conserve, dérivés de matériaux conformes à ceux que décrit le brevet français 2.465.011, c'est-à-dire comportant sur chaque face une couche d'étain de préférence inférieure à 1,5 g/m² et une couche mixte de chrome et d'oxyde de chrome avec de 50 à 100 mg/m² de chrome métallique, et de 6 à 25 mg/m² de chrome sous forme d'oxyde. Ces essais étaient destinés à mettre en lumière les variations de la latitude de soudage exprimée en fonction de l'angle de conduction qui résultent de l'utilisation de matériaux présentant des asymétries de revêtement. Les matériaux en essai avaient subi un étuvage de 30 minutes à 200 °C, correspondant à celui qui est utilisé pour polymériser des vernis de protection, à titre de comparaison, on présente les résultats sur un fer blanc classique, et sur un témoin selon le brevet FR 2.465.011, non étuvé. Le tableau I indique les latitudes de soudage obtenues en fonction des épaisseurs des différents revêtements, sur les faces intérieure et extérieure du corps de boîte.

Tableau I

| Essai | Face intérieure | | | Face extérieure | | | Latitude de soudage (1% d'angle de conduction) |
|---|---|---|---|---|---|---|---|
| | Sn g/m² | Cr mg/m² | CrOx mg/m² | Sn g/m² | Cr mg/m² | CrOx mg/m² | |
| Fer blanc | 2,8 | <10 | <10 | 2,8 | <10 | <10 | 10 |
| Témoin(1) | 0,7 | 60 | 12 | 0,7 | 60 | 12 | 10 |
| A (2) | 0,7 | 60 | 12 | 0,7 | 60 | 12 | 1-3 |
| B (2) | 0,8 | 60 | 10 | 0,3 | 60 | 10 | 8-10 |
| C (2) | 0,5 | 40 | 10 | 0,5 | 90 | 20 | 6-8 |
| D (2) | 0,8 | 40 | 10 | 0,3 | 90 | 20 | 10-12 |

(1) non étuvé — (2) étuvé

Remarque : l'inversion des faces intérieure et extérieure des essais B, C et D conduit à des latitudes de soudage pratiquement nulles.

Il ressort des résultats de ce Tableau I que lorsque les revêtements des matériaux sont dissymétriques, le sens dans lequel on présente ce matériau à la soudure, par rapport aux molettes de diamètres différents est très important pour la latitude de soudage. On constate, par rapport à un matériau symétrique (essai A) des élargissements significatifs de la latitude de soudage pour des matériaux à revêtement d'épaisseur dissymétrique, lorsque le revêtement d'étain d'épaisseur la plus faible est à l'extérieur (essai B) lorsque le revêtement de chrome et d'oxyde de chrome d'épaisseur la plus faible est à l'intérieur (essai C) et mieux encore lorsque les dissymétries précédentes sont simultanées (essai D). Comme on l'a fait remarquer ci-dessus, l'inversion de la dissymétrie conduit à une latitude pratiquement nulle. Il est clair que la latitude de soudage définit, au moins pour une exploitation industrielle sérieuse, un critère essentiel de soudabilité.

Mais les résultats rapportés dans cet exemple 1 revêtent un aspect encore indicatif, et ne permettent pas de dégager des règles précises, susceptibles d'augmenter la fiabilité du soudage à la molette.

On a tenté une autre approche du phénomène en déterminant la résistance spécifique de contact d'une face d'un matériau vis-à-vis du cuivre, en fonction de l'épaisseur d'étain, ainsi que du chrome et de l'oxyde de chrome. On a opéré par la méthode exposée plus haut, où l'on annule la contribution de l'autre face du matériau à la chute de tension entre électrodes, par une abrasion suivie d'un étamage électrolytique.

Exemple 2. Variation de la résistance de contact spécifique en fonction de l'épaisseur d'étain.

On a opéré avec un matériau comportant, sur la face en essai une couche d'étain d'épaisseur variable, surmontée d'une couche mixte comprenant 60 mg/m² de chrome métal et 10 mg/m² de chrome à l'état d'oxyde. On a, pour chaque épaisseur d'étain, mesuré la résistance spécifique de contact de la face du matériau sortant de fabrication, et après un étuvage de 20 min. à 200 °C. Ces résultats sont résumés dans le tableau suivant :

Tableau II

| Epaisseur d'étain g/m² | 0,2 | 0,3 | 0,4 | 0,5 | 0,6 | 0,7 | 0,75 | 0,8 | 0,9 | 1,0 | 1,1 |
|---|---|---|---|---|---|---|---|---|---|---|---|
| Résistance spécifique brut $10^{-5}$ Ω/cm² | 0,5 | 0,5 | 0,5 | 0,5 | 0,5 | 0,5 | 0,5 | 0,5 | 0,5 | 0,5 | 0,5 |
| étuvé $10^{-5}$ Ω/cm² | 4,9 | 5,0 | 4,9 | 4,3 | 4,2 | 2,5 | 3 | 0,6 | 0,6 | 0,6 | 0,5 |

Remarques : on enregistre une certaine dispersion des mesures après étuvage. Il apparaît néanmoins qu'au-delà de 0,8 g/m² on n'a plus de variations notables de la résistance spécifique de contact, qui s'établit sensiblement à la même valeur que le fer étamé. On constate qu'en-deçà de 0,8 g/m² les valeurs relevées dépassent toutes $2 \times 10^{-5}$ ohm/cm². Il ne serait pas impossible que cette valeur de 0,8 g/m² corresponde approximativement à la quantité d'étain qui s'allie au fer dans les conditions d'étuvage.

Exemple 3. Variations de la résistance de contact spécifique en fonction de l'épaisseur de chrome.

On a opéré avec un matériau comportant, sur sa face en essai une couche d'étain de 0,6 g/m² surmontée d'une couche mixte de chrome et d'oxyde de chrome. L'épaisseur de la couche mixte est exprimée en chrome total, sachant que les conditions de dépôt de la couche mixte étaient sensiblement constantes, à l'exception de la charge électrique par unité de surface ; les mesures ont été exécutées après que l'étain ait été totalement allié au fer par chauffage.

Tableau III

| Ep Cr mg/m² | 0 | 5 | 10 | 15 | 20 | 40 | 50 | 70 | 90 | 110 |
|---|---|---|---|---|---|---|---|---|---|---|
| Résistance spécifique $10^{-5}$ Ω/cm² | 0,5 | 1,0 | 2,0 | 2,7 | 3 | 3,6 | 3,4 | 4,0 | 4,5 | 5,0 |

On notera qu'à partir de 20 mg/m² de chrome, la résistance spécifique de contact pourrait s'exprimer par la formule :

$$\rho sCr = (2,55 + 0,022\ x)10^{-5}\ \Omega/cm^2$$

x étant l'épaisseur en chrome total compté en mg/m².

Exemple 4

Dans un temps suivant, la Demanderesse a procédé à une étude de la latitude de soudage obtenue par utilisation de matériaux divers présentant des dissymétries de résistance de contact, dérivés de matériaux usuels dans la fabrication de boîtes à conserve cylindriques. Les résultats en sont présentés dans le tableau IV.

6

**0 140 775**

On précise que ces essais ont été effectués sur une machine à souder à la molette, avec interposition d'un fil de cuivre de diamètre 1,38 mm, laminé de telle sorte que son grand diamètre soit de 1,8 mm. La vitesse de défilement des corps de boîte était de 50 m/min., avec les dispersions usuelles. La molette extérieure présentait un diamètre de 110 mm, et la molette intérieure un diamètre de $60 \pm 2$ mm, et la force de serrage des molettes était de 400 N. On notera que les variations de diamètre de la molette intérieure, de 62 à 58 mm, correspondent à des réusinages destinés à rafraîchir les surfaces de contact ; on précise que ceci correspond sensiblement à une variation relative du diamètre de 6,7 %, et que les résultats n'ont pas été altérés de façon significative par la variation de diamètre de la molette intérieure.

Dans le tableau, on utilise des expressions et sigles usuels dans le métier, qui vont être explicités :

— Un fer blanc est une tôle d'acier doux, revêtue sur ses deux faces d'étain avec une épaisseur suffisante pour résister à la corrosion dans les conditions d'utilisation sans revêtement complémentaire ; l'épaisseur d'étain est usuellement égale au moins à 2,8 g/m². L'étain est fréquemment allié au fer, et subit un traitement de passivation par chromatation.

— Un fer noir est une tôle d'acier doux, non revêtue.

— Un E.C.C.S. est une tôle d'acier doux, revêtue sur chacune de ses faces d'une couche mixte de chrome et d'oxyde de chrome, avec 30 à 200 mg/m² de chrome métallique et 5 à 20 mg/m² d'oxyde de chrome.

— Un L.T.S. est une tôle d'acier doux, revêtue d'une mince couche d'étain non allié et d'une couche mixte de chrome et d'oxyde de chrome, suivant les enseignements du brevet français 2.465.011.

On précise en outre que les différents substrats d'acier doux présentent des épaisseurs comprises entre 0,15 et 0,49 mm.

(Voir Tableau IV pages 8 et suivantes)

Remarque : l'essai 14 a été réalisé avec un matériau obtenu sur une ligne prévue pour l'élaboration d'un L.T.S., en n'appliquant pas de tension entre les électrodes de la cuve d'étamage. Il y a donc un dépôt non mesurable d'étain par déplacement.

On notera que dans ce tableau les résistances spécifiques de contact vis-à-vis du cuivre, désignées par $\rho Cu$, sont exprimées par deux valeurs, limites inférieure et supérieure. L'exécution d'essais suppose la mise en œuvre d'un matériau élaboré spécialement en bobines de grande longueur. Les limites inférieure et supérieure indiquées correspondent à des mesures effectuées sur des échantillons prélevés en différentes zones sur la longueur ; la gamme de dispersion rend compte des variations possibles en fabrication, mais masque la dispersion d'asymétrie ; les variations de résistances spécifiques de contact des deux faces sont corrélées, car ces résistances spécifiques sont fonction de l'épaisseur de revêtement, et localement les variations de conditions de revêtement se répercutent sur les deux faces de façon analogue. L'appréciation du rapport des résistances spécifiques de contact des deux faces se fera sur des valeurs moyennes, entre les limites.

En outre, les essais 1 à 3, 5, 7 et 8 ont porté sur des matériaux à revêtement symétrique, et permettent, par comparaison, de rendre compte de l'amélioration de latitude de soudage qu'apporte la présente invention, avec ses limites.

On peut classer les latitudes de soudages en nulles, médiocres, acceptables, bonnes et excellentes selon qu'elles sont respectivement inférieures à 1, comprises entre 1 et 4, comprises entre 5 et 8, comprises entre 9 et 12, et supérieures à 12.

La première conclusion qui se dégage du tableau IV est que, lorsque les revêtements des deux faces présentent des résistances spécifiques de contact inférieures à $1 \times 10^{-5}$ ohm/cm² vis-à-vis du cuivre, la latitude de soudage est bonne avec des revêtements symétriques (essais 1 et 7).

Une autre conclusion est que le rapport des résistances spécifiques de contact est un facteur plus important que la valeur absolue de ces résistances spécifiques pour l'amélioration des latitudes de soudage. On comparera à cet égard les essais 4, 11 et 12 aux essais 10, 13 et 14.

Il ressort en outre que la dissymétrie des rayons de courbure des électrodes provoque une dissymétrie beaucoup plus importante dans le processus de soudage. Dans les essais présentés le rapport des rayons de courbure est de l'ordre de 1,8. Or, même en mettant à part l'essai 4 pour lequel des facteurs particuliers ont pu jouer, on constate que l'on obtient des latitudes de soudage bonnes ou excellentes avec des rapports de résistance de 2,8 et 5,7 (notamment essais 11 et 12).

La Demanderesse a étudié avec une attention particulière, sous l'aspect de la dissymétrie de revêtement, les matériaux dits L.T.S. qui comportent sur chacune des deux faces d'une tôle d'acier doux, une couche d'étain d'au plus 1,05 g/cm² et une couche mixte de chrome métallique et d'oxyde de chrome, avec 5 à 140 mg/m² de chrome métallique et de 1 à 30 mg/m² de chrome à l'état d'oxyde.

Tableau IV

| MATERIAUX | REVETEMENTS | | Résistance spécifique de contact $\rho_{Cu}$ $(10^{-5}\,\Omega/cm^2)$ | | $\rho_B/\rho_A$ | LATITUDE SOUDAGE | |
|---|---|---|---|---|---|---|---|
| | Face A | Face B | Face A | Face B | | Face A /molette + petit Ø | Face B /molette + petit Ø |
| (1) Fer-blanc E 2,8/2,8 | Sn 2,8 g/m$^2$ | Sn 2,8 g/m$^2$ | 0,4-0,5 | 0,4-0,5 | 1 | 10-12 | 10-12 |
| (2) Fer-noir | Néant | Néant | 20-100 | 20-100 | 1 | N.S. | N.S. |
| (3) E.C.C.S. | Cr° 30-200mg/m$^2$ Crox 5-20mg/m$^2$ | Cr° 30-200mg/m$^2$ Crox 5-20mg/m$^2$ | 50-500 | 50-500 | 1 | N.S. | N.S. |
| (4) Fer étamé 1 face | Sn 2,8g/m$^2$ | Néant | 0,4-0,5 | 20-100 | 133 | 10-15 | N.S. |
| (5) Fer Nickelé | Ni 150mg/m$^2$ | Ni 150mg/m$^2$ | 8-10 | 8-10 | 1 | 2-3 | 2-3 |
| (6) Fer Nickelé chromé | Ni 150mg/m$^2$ | Ni 150mg/m$^2$ + Cr° 50-60mg/m$^2$ + Crox 10-15mg/m$^2$ | 8-10 | 20-30 | 2,8 | 7-10 | N.S. |

0 140 775

Tableau IV (Suite)

| MATERIAUX | REVETEMENTS | | Résistance spécifique de contact $\rho_{Cu}$ $(10^{-5}\,\Omega/cm^2)$ | | $\rho_B/\rho_A$ | LATITUDE SOUDAGE | |
|---|---|---|---|---|---|---|---|
| | Face A | Face B | Face A | Face B | | Face A /molette + petit ∅ | Face B /molette + petit ∅ |
| (7) L.T.S. "Brut fabrication" | Sn 0,4-0,6g/m$^2$ Cr° 50-60mg/m$^2$ Crox 10-12mg/m$^2$ | Sn 0,4-0,6g/m$^2$ Cr° 50-60mg/m$^2$ Crox 10-12mg/m$^2$ | 0,5-0,7 | 0,5-0,7 | 1 | 8-10 | 8-10 |
| (8) Même L.T.S. étuvé 2x10-12 min. à 200°C-205°C | comme ci-dessus | | 3,8-4,7 | 3,8-4,7 | 1 | 1-3 | 1-3 |
| (9) L.T.S. asymétrique en Sn étuvé 2x10-12 min. à 200°C-205°C | Sn 0,7-0,8g/m$^2$ Cr° 50-60mg/m$^2$ Crox 10-12mg/m$^2$ | Sn 0,2-0,3g/m$^2$ Cr° 50-60mg/m$^2$ Crox 10-12mg/m$^2$ | 1,1-3,5 | 4,5-5,0 | 2,06 | 8-10 | N.S. |
| (10) L.T.S. asymétrique en Cr étuvé 2x10-12 min. à 200°C-205°C | Sn 0,4-0,6g/m$^2$ Cr° 25-35mg/m$^2$ Crox 10-12mg/m$^2$ | Sn 0,4-0,6g/m$^2$ Cr° 75-85mg/m$^2$ Crox 10-12mg/m$^2$ | 3,3-4,2 | 4,4-5,2 | 1,28 | 6-8 | N.S. |

0 140 775

Tableau IV   (Suite)

| MATERIAUX | REVETEMENTS | | Résistance spécifique de contact $\rho\,Cu\;(10^{-5}\Omega/cm^2)$ | | $\rho_B/\rho_A$ | LATITUDE SOUDAGE | |
|---|---|---|---|---|---|---|---|
| | Face A | Face B | Face A | Face B | | Face A /molette + petit Ø | Face B /molette + petit Ø |
| **(11)** L.T.S. asymétrique en Sn et en Cr étuvé 2x10-12 min. à 200-205°C | Sn 0,7-0,8g/m² Cr° 25-35mg/m² Crox 10-12mg/m² | Sn 0,2-0,3g/m² Cr° 75-85mg/m² Crox 10-12mg/m² | 0,8-2,9 | 5,0-5,5 | 2,8 | 10-12 | N.S. |
| **(12)** L.T.S. asymétrique en Sn et Cr° étuvé 2x10-12 min. à 200-205°C | Sn 0,4-0,6g/m² Cr° 25-35mg/m² Crox 10-12mg/m³ | Sn 0,01-0,1g/m² Cr° 75-85mg/m² Crox 10-12mg/m² | 3,3-4,2 | 17-26 | 5,7 | 12-14 | N.S. |
| **(13)** L.T.S. asymétrique en Sn et Cr étuvé 1x10-12 min. à 200-205°C | Sn 0,6-0,7g/m² Cr° 5-10mg/m² Crox 1-5mg/m² | Sn 0,9-1,0g/m² Cr° 100-120mg/m² Crox 20-25mg/m² | 1,2-2,4 | 1,9-2,3 | 1,16 | 6-8 | N.S. |
| **(14)** E.C.C.S. asymétrique en Cr | Sn : $\varepsilon$ Cr° 20-30mg/m² Crox 5-10mg/m² | Sn : $\varepsilon$ Cr° 100-120mg/m² Crox 20-25mg/m² | 14-17 | 25-35 | 1,9 | 7-9 | N.S. |

Exemple 5. Variation de la résistance spécifique de contact en fonction des épaisseurs d'étain et de chrome.

Cet exemple correspond à une combinaison des exemples 2 et 3. Les valeurs pondérées des résistances de contact sont présentées dans le tableau V.

Tableau V

| $E_{CrCrOx}$ mg/m$^2$ $E_{Sn}$ g/m$^2$ | 0 | 5 | 10 | 15 | 20 | 40 | 50 | 70 | 90 | 110 |
|---|---|---|---|---|---|---|---|---|---|---|
| 0,1 | 0,5 | 1,0 | 2,5 | 5,0 | 5,2 | 5,7 | 6,0 | 6,4 | 6,7 | 7,1 |
| 0,3 | 0,5 | 1,0 | 2,0 | 3,6 | 3,8 | 4,2 | 4,4 | 4,8 | 5,2 | 5,7 |
| 0,6 | 0,5 | 1,0 | 2,0 | 2,7 | 3,0 | 3,4 | 3,6 | 4,0 | 4,5 | 5,0 |
| 0,75 | 0,5 | 1,0 | 2,0 | 2,1 | 2,2 | 2,6 | 2,8 | 3,3 | 3,6 | 3,9 |
| $\geqslant$ 0,8 | 0,5 | 0,5 | 0,6 | 0,6 | 0,6 | 0,8 | 0,9 | 1,2 | 1,5 | 1,7 |

On notera que, dans tous ces essais, le matériau avait été chauffé à une température et pendant une durée suffisante pour que tout l'étain se soit allié au fer.

Une autre série de mesures a été effectuée pour étudier la relation entre dissymétrie de résistances spécifiques de contact entre faces, et latitude de soudage.

Exemple 6

On a opéré comme précédemment avec une machine de soudage équipée de molettes de diamètres 110 et 60 respectivement pour les molettes extérieure et intérieure, avec une force de serrage de 400 N et une vitesse de défilement de 50 m/min. Le matériau était un L.T.S. et on s'est imposé une condition supplémentaire, selon laquelle la moyenne des résistances spécifiques de contact des faces était supérieure à $2 \times 10^{-5}$ ohm/cm$^2$. Les résultats sont présentés dans le tableau VI.

Tableau VI

| $\rho$ ext./$\rho$ int. | 1 | 1,5 | 2 | 3 | 4,5 | 6 |
|---|---|---|---|---|---|---|
| latitude | 1-3 | 6-8 | 7-9 | 8-11 | 10-12 | 12-14 |

Cet exemple confirme notamment une des conclusions avancées dans l'exemple 4, relative à l'importance comparée des dissymétries de rayons de courbure des électrodes, et des dissymétries de résistances spécifiques de contact sur la latitude de soudage.

L'enseignement qui semble s'en dégager est que l'amélioration de la soudabilité par une dissymétrie des résistances spécifiques de contact dépend plus de l'existence d'une dissymétrie entre les rayons de courbure des électrodes que de la valeur de cette dernière dissymétrie. On rappelle que la retouche de diamètre de la molette intérieure qui passe de 62 à 58 mm, soit une variation de rapport de diamètre de 1,77 à 1,90, ne fait apparaître aucune variation significative de la latitude de soudage.

Malgré les difficultés rencontrées pour apprécier l'influence d'un rapport de rayons de courbure sur la latitude de soudage, en raison des transformations à faire subir à une machine pour modifier de façon significative le rapport des diamètres de molette, et des modifications des conditions de soudage qui en résulteraient, la Demanderesse a pu faire apparaître, par des essais de laboratoire, que la dissymétrie des rayons de courbure n'avait d'effet significatif que lorsque le rapport des rayons de courbure était au moins égal à 1,2. On remarquera que, dans le tableau VI, il apparaît que déjà avec un rapport de résistances spécifiques de contact de 1,5, la latitude de soudage est considérablement augmentée : en outre l'essai 13 de l'exemple 4 manifeste une augmentation non négligeable de la latitude de soudage par

11

rapport à l'exemple 3. On trouve donc une série d'indications convergentes que les dissymétries deviennent significatives pour des rapports à partir d'approximativement 1,2.

.Il découle des observations de la Demanderesse, de façon intuitivement évidente, qu'il doit exister une limite supérieure au-delà de laquelle la dissymétrie doit conduire à une diminution de la latitude de soudage. Mais la Demanderesse n'a pas mis en lumière une telle diminution de latitude de soudage. Toutefois l'exemple 4, qui vise la plus large gamme de matériaux, n'a pas mis en œuvre de matériau qui se soit révélé soudable par application des règles précisées par la Demanderesse, avec une résistance spécifique de contact pour la face la plus résistante, supérieure à $35 \times 10^{-5}$ ohm/cm², sauf pour l'essai 4. Comme on l'a déjà fait remarquer, cet essai est particulier ; on peut attribuer la soudabilité exceptionnelle, dans le sens défini, à la présence d'étain allié susceptible de diffuser rapidement à l'interface entre les lèvres.

On peut admettre que, dans leur ensemble, les revêtements de substrats de tôle, susceptibles de protéger convenablement le substrat dans les conditions d'utilisation des boîtes à conserve, peuvent être réalisés dans des conditions économiques acceptables avec des résistances spécifiques de contact inférieures à $50 \times 10^{-5}$ ohm/cm² ; on admettra donc comme limite supérieure raisonnable cette valeur de $50 \times 10^{-5}$.

Sous un autre aspect la Demanderesse a fait porter ses recherches plus spécialement sur les matériaux dits L.T.S., qui présentent une bonne soudabilité, même sans asymétrie, tant que la couche d'étain n'a pas diffusé substantiellement dans l'acier sous-jacent, et qui présentent une résistance à la corrosion plutôt supérieure aux aciers dits E.C.C.S., recouverts sur chaque face d'une couche mixte de chrome métallique et d'oxyde de chrome. Mais la soudabilité de ces L.T.S. diminue lorsque, pour des questions de résistance à la corrosion vis-à-vis de produits particuliers, ou toute autre raison, on les soumet à un vernissage à l'aide d'un vernis polymérisable à chaud.

Comme la présente invention permet, par modulation de la dissymétrie de résistance spécifique de contact, de rétablir une bonne soudabilité, et que, comme il ressort des essais présentés à l'exemple 4, les L.T.S. sont susceptibles de présenter des dissymétries de résistances spécifiques de contact suffisantes par des modifications relativement minimes des compositions de revêtement, il devient possible de produire toute une gamme de matériaux adaptables à des conditions diverses sans modification de fond du processus d'élaboration. En effet, il suffit, dans les différents bains que traverse la bande pour être revêtue d'abord d'étain, puis de la couche de chrome métallique et d'oxyde de chrome, d'ajuster la répartition des courants de dépôt entre les faces de la tôle, au prorata des épaisseurs de revêtement.

Il est à noter que pratiquement tous les essais ont été effectués avec des conditions sensiblement constantes de dépôt de la couche mixte chrome métallique et chrome à l'état d'oxyde, sauf la densité de courant par face ; ces conditions correspondent à des compositions préférées de la couche mixte. Les réglages de dissymétrie d'épaisseur de la couche mixte n'ont pas modifié la composition relative des couches mixtes dans des proportions susceptibles d'altérer sensiblement la résistance à la corrosion, ou de modifier les résistances spécifiques de contact. Aussi, dans de nombreux exemples, on a exprimé les épaisseurs de la couche mixte par sa teneur en chrome total.

## Revendications

1. Procédé de soudage de corps d'emballages formés en cylindre, notamment boîtes à conserve, en un matériau comportant sur une des faces au moins d'une tôle d'acier doux un revêtement conducteur de protection dont la résistance spécifique de contact vis-à-vis du cuivre est au moins égale à $1 \times 10^{-5}$ ohm/cm², procédé où le corps, roulé avec des lèvres venant en superposition suivant une génératrice défile, à une vitesse pouvant atteindre au moins 50 m/min., serré suivant cette génératrice entre deux électrodes de soudage par résistance, le rapport du rayon de courbure d'une première électrode à celui de la seconde étant au moins égal à 1,2, caractérisé en ce que l'on choisit le matériau avec un rapport de résistance spécifique de contact de la première face à celle de la seconde au moins égal à 1,2, et en ce que le matériau est roulé en sorte que la première face soit en contact avec la première électrode.

2. Procédé suivant la revendication 1, caractérisé en ce que le matériau comporte, sur chacune des faces d'une tôle d'acier doux, une couche d'étain d'au plus 1,05 g/m² recouverte d'une couche mixte de chrome et d'oxyde de chrome constituée de 5 à 140 mg/m² de chrome métallique et de 1 à 30 mg/m² de chrome à l'état d'oxyde, et en ce que l'épaisseur d'étain de la première face est inférieure à celle de la seconde et/ou l'épaisseur de chrome de la seconde face est inférieure à celle de la première, dans des rapports tels que le rapport de résistances spécifiques de contact vis-à-vis du cuivre des faces soit au moins égal à 1,5.

3. Procédé suivant la revendication 2, caractérisé en ce que la seconde face porte 0.4 à 0,8 g/m² d'étain et 26 à 60 mg/m² de chrome métallique avec 10 à 12 mg/m² de chrome à l'état d'oxyde. tandis que la première face porte 0,01 à 0,6 g/m² d'étain et 50 à 85 mg/m² de chrome métallique avec 10 à 25 mg/m² de chrome à l'état d'oxyde.

4. Procédé suivant la revendication 2, caractérisé en ce que la seconde face porte 0.7 à 0,8 g/m² d'étain et 50 à 60 mg/m² de chrome métallique avec 10 à 12 mg/m² de chrome à l'état d'oxyde, tandis que la première face porte 0,2 à 0,3 g/m² d'étain et 50 à 60 mg/m² de chrome métallique avec 10 à 12 mg/m² de chrome à l'état d'oxyde.

5. Procédé suivant la revendication 2, caractérisé en ce que la seconde face porte 0,4 à 0,6 g/m² d'étain et 25 à 35 mg/m² de chrome métallique avec 10 à 12 mg/m² de chrome à l'état d'oxyde, tandis que la première face porte 0,4 à 0,6 g/m² d'étain et 75 à 85 mg/m² de chrome métallique avec 10 à 12 mg/m² de chrome à l'état d'oxyde.

6. Procédé suivant la revendication 2, caractérisé en ce que la seconde face porte 0,7 à 0,8 g/m² d'étain et 25 à 35 mg/m² de chrome métallique avec 10 à 12 mg/m² de chrome à l'état d'oxyde, tandis que la première face porte 0,2 à 0,3 g/m² d'étain et 75 à 85 mg/m² de chrome métallique avec 10 à 12 mg/m² de chrome à l'état d'oxyde.

7. Procédé suivant la revendication 2, caractérisé en ce que la seconde face porte 0,4 à 0,6 g/m² d'étain et 25 à 35 mg/m² de chrome métallique avec 10 à 12 mg/m² de chrome à l'état d'oxyde, tandis que la première face porte 0,01 à 0,1 g/m² d'étain et 75 à 85 mg/m² de chrome métallique avec 10 à 12 mg/m² de chrome à l'état d'oxyde.

8. Procédé suivant la revendication 2, caractérisé en ce que la seconde face porte 0,6 à 0,7 g/m² d'étain et 5 à 10 mg/m² de chrome métallique avec 1 à 5 mg/m² de chrome à l'état d'oxyde, tandis que la première face porte 0,9 à 1,0 g/m² d'étain et 100 à 120 mg/m² de chrome métallique avec 20 à 25 mg/m² de chrome à l'état d'oxyde.

**Claims**

1. Process for the welding of packing bodies formed into cylinders, particularly preserve cans, of a material comprising on at least one face of a mild steel sheet a conductive protective coating whose contact resistivity in relation to copper is at least equal to $1 \times 10^{-5}$ ohm/cm², in which process the body, which is rolled with lips superposed along a generatrix, moves at a speed which may attain at least 50 metres per minute while clamped along said generatrix between two resistance welding electrodes, the ratio of the radius of curvature of a first electrode to that of the second being at least equal to 1.2, characterized in that the material is selected to have a ratio of contact resistivity of the first face to that of the second at least equal to 1.2, and in that the material is rolled in such a manner that the first face is in contact with the first electrode.

2. Process according to Claim 1, characterized in that the material has on each face of a mild steel sheet a coating of tin of at least 1.05 g/m² covered by a mixed coating of chromium and chromium oxide consisting of 5 to 140 mg/m² of metallic chromium and of 1 to 30 mg/m² of chromium in the form of oxide, and in that the thickness of tin on the first face is less than that on the second, and/or the thickness of chromium on the second face is less than that on the first, in ratios such that the ratio of contact resistivities of the faces in relation to copper is at least equal to 1.5.

3. Process according to Claim 2, characterized in that the second face carries 0.4 to 0.8 g/m² of tin and 26 to 60 mg/m² of metallic chromium with 10 to 12 mg/m² of chromium in the oxide state, while the first face carries 0.01 to 0.6 g/m² of tin and 50 to 85 mg/m² of metallic chromium with 10 to 25 mg/m² of chromium in the oxide state.

4. Process according to Claim 2, characterized in that the second face carries 0.7 to 0.8 g/m² of tin and 50 to 60 mg/m² of metallic chromium with 10 to 12 mg/m² of chromium in the oxide state, while the first face carries 0.2 to 0.3 g/m² of tin and 50 to 60 mg/m² of metallic chromium with 10 to 12 mg/m² of chromium in the oxide state.

5. Process according to Claim 2, characterized in that the second face carries 0.4 to 0.6 g/m² of tin and 25 to 35 mg/m² of metallic chromium with 10 to 12 mg/m² of chromium in the oxide state, while the first face carries 0.4 to 0.6 g/m² of tin and 75 to 85 mg/m² of metallic chromium with 10 to 12 mg/m² of chromium in the oxide state.

6. Process according to Claim 2, characterized in that the second face carries 0.7 to 0.8 g/m² of tin and 25 to 35 mg/m² of metallic chromium with 10 to 12 mg/m² of chromium in the oxide state, while the first face carries 0.2 to 0.3 g/m² of tin and 75 to 85 mg/m² of metallic chromium with 10 to 12 mg/m² of chromium in the oxide state.

7. Process according to Claim 2, characterized in that the second face carries 0.4 to 0.6 g/m² of tin and 25 to 35 mg/m² of metallic chromium with 10 to 12 mg/m² of chromium in the oxide state, while the first face carries 0.01 to 0.1 g/m² of tin and 75 to 85 mg/m² of metallic chromium with 10 to 12 mg/m² of chromium in the oxide state.

8. Process according to Claim 2, characterized in that the second face carries 0.6 to 0.7 g/m² of tin and 5 to 10 mg/m² of metallic chromium with 1 to 5 mg/m² of chromium in the oxide state, while the first face carries 0.9 to 1.0 g/m² of tin and 100 to 120 mg/m² of metallic chromium with 20 to 25 mg/m² of chromium in the oxide state.

**Patentansprüche**

1. Verfahren zum Schweißen von zu Zylindern geformten Verpackungskörpern, insbesondere Konservendosen, aus einem Material, das auf wenigstens einer der Flächen eines Weichstahlblechs einen leitenden Schutzüberzug aufweist, dessen spezifischer Kontaktwiderstand gegenüber Kupfer wenigstens gleich $1 \times 10^{-5}$ Ohm/cm$^2$ beträgt, wobei bei diesem Verfahren der Körper, der mit Lippen, die entsprechend einer Erzeugenden in Überlagerung kommen bei einer Geschwindigkeit, die wenigstens 50 m/min. erreichen kann, eingespannt entsprechend dieser Erzeugenden, zwischen zwei Widerstandsschweißelektroden durchläuft, wobei das Verhältnis des Krümmungsradius einer ersten Elektrode zu dem der zweiten wenigstens gleich 1,2 ist, dadurch gekennzeichnet, daß man das Material mit einem Verhältnis des spezifischen Kontaktwiderstandes der ersten Fläche zu der der zweiten von wenigstens 1,2 wählt und daß das Material derart gerollt wird, daß die erste Fläche in Kontakt mit der ersten Elektrode steht.

2. Verfahren nach Anspruch 1, dadurch gekennzeichnet, daß das Material auf jeder der Flächen eines Weichstahlbleches eine Zinnschicht von höchstens 1,05 g/m$^2$ trägt, die von einer Mischschicht aus Chrom und Chromoxid abgedeckt ist und aus 5 bis 140 mg/m$^2$ metallischen Chroms und 1 bis 30 mg/m$^2$ Chroms im Oxidzustand besteht und daß die Dicke des Zinns der ersten Schicht kleiner als die der zweiten und/oder Dicke des Chroms der zweiten Fläche kleiner als die der ersten in Verhältnissen derart ist, daß das Verhältnis der spezifischen kontaktwiderstände gegenüber Kupfer der Flächen wenigstens gleich 1,5 wird.

3. Verfahren nach Anspruch 2, dadurch gekennzeichnet, daß die zweite Fläche 0,4 bis 0,8 g/m$^2$ Zinn und 26 bis 60 mg/m$^2$ metallischen Chroms mit 10 bis 12 mg/m$^2$ Chrom im Oxidzustand trägt, während die erste Fläche 0,01 bis 0,6 g/m$^2$ Zinn und 50 bis 85 mg/m$^2$ metallischen Chroms mit 10 bis 25 mg/m$^2$ Chrom im Oxidzustand trägt.

4. Verfahren nach Anspruch 2, dadurch gekennzeichnet, daß die zweite Fläche 0,7 bis 0,8 g/m$^2$ Zinn und 50 bis 60 mg/m$^2$ metallischen Chroms mit 10 bis 12 mg/m$^2$ Chrom im Oxidzustand trägt, während die erste Fläche 0,2 bis 0,3 g/m$^2$ Zinn und 50 bis 60 mg/m$^2$ metallischen Chroms mit 10 bis 12 mg/m$^2$ Chrom im Oxidzustand trägt.

5. Verfahren nach Anspruch 2, dadurch gekennzeichnet, daß die zweite Fläche 0,4 bis 0,6 g/m$^2$ Zinn und 25 bis 35 mg/m$^2$ metallischen Chroms mit 10 bis 12 mg/m$^2$ Chrom im Oxidzustand trägt, während die erste Fläche 0,4 bis 0,6 g/m$^2$ Zinn und 75 bis 85 mg/m$^2$ metallischen Chroms mit 10 bis 12 mg/m$^2$ Chrom im Oxidzustand trägt.

6. Verfahren nach Anspruch 2, dadurch gekennzeichnet, daß die zweite Fläche 0,7 bis 0,8 g/m$^2$ Zinn und 25 bis 35 mg/m$^2$ metallischen Chroms mit 10 bis 12 mg/m$^2$ Chrom im Oxidzustand trägt, während die erste Fläche 0,2 bis 0,3 g/m$^2$ Zinn und 75 bis 85 mg/m$^2$ metallischen Chroms mit 10 bis 12 mg/m$^2$ Chrom im Oxidzustand trägt.

7. Verfahren nach Anspruch 2, dadurch gekennzeichnet, daß die zweite Fläche 0,4 bis 0,6 g/m$^2$ Zinn und 25 bis 35 mg/m$^2$ metallischen Chroms mit 10 bis 12 mg/m$^2$ Chrom im Oxidzustand trägt, während die erste Fläche 0,01 bis 0,1 g/m$^2$ Zinn und 75 bis 85 mg/m$^2$ metallischen Chroms mit 10 bis 12 mg/m$^2$ Chrom im Oxidzustand trägt.

8. Verfahren nach Anspruch 2, dadurch gekennzeichnet, daß die zweite Fläche 0,6 bis 0,7 g/m$^2$ Zinn und 5 bis 10 mg/m$^2$ metallischen Chroms mit 1 bis 5 mg/m$^2$ Chrom im Oxidzustand trägt, während die erste Fläche 0,9 bis 1,0 g/m$^2$ Zinn und 100 bis 120 mg/m$^2$ metallischen Chroms mit 20 bis 25 mg/m$^2$ Chrom im Oxidzustand trägt.